# EUROPÄISCHE PATENTSCHRIFT

(11) **EP 1 826 632 B1**
(45) Veröffentlichungstag und Bekanntmachung des Hinweises auf die Patenterteilung: **30.12.2015**
(21) Anmeldenummer: 06003545.8
(22) Anmeldetag: 22.02.2006
(51) Int. Cl.: G03H 1/08, G03H 1/22

(54) **Verfahren zum Berechnen von computergenerierten Hologrammen auf einer unebenen Fläche**
Method for calculating computer generated holograms on an non-planar surface
Procédé destiné au calcul d'hologrammes générés par ordinateur sur une surface non-planaire

(43) Veröffentlichungstag der Anmeldung: 29.08.2007
(60) Teilanmeldung: 12179395.4
(73) Patentinhaber: tesa scribos GmbH, 69126 Heidelberg (DE)
(72) Erfinder: Scheibenstock, Steffen, 70197 Stuttgart (DE); Borgsmüller, Stefan, 69126 Heidelberg (DE)
(74) Vertreter: Cohausz & Florack

(56) Entgegenhaltungen:
- FRERE C: "RECONSTRUCTION IN INCLINED PLANES OF CURVED COMPUTER GENERATED HOLOGRAMS" APPLIED OPTICS, OSA, OPTICAL SOCIETY OF AMERICA, WASHINGTON, DC, US, Bd. 29, Nr. 32, 10. November 1990 (1990-11-10), Seiten 4761-4765, XP000162132 ISSN: 0003-6935
- ROSEN J: "Computer-generated holograms of images reconstructed on curved surfaces" APPLIED OPTICS OPT. SOC. AMERICA USA, Bd. 38, Nr. 29, 10. Oktober 1999 (1999-10-10), Seiten 6136-6140, XP002399657 ISSN: 0003-6935
- PATENT ABSTRACTS OF JAPAN Bd. 2000, Nr. 22, 9. März 2001 (2001-03-09) -& JP 2001 142379 A (VICTOR CO OF JAPAN LTD), 25. Mai 2001 (2001-05-25)

## Beschreibung

Die vorliegende Erfindung betrifft ein computerimplementiertes Verfahren zum Berechnen eines auf einer unebenen Fläche anzuordnenden computergenerierten Reflexionshologramms und ein Verfahren zum Herstellen des Hologramms.

Computergenerierte Hologramme bestehen aus einer oder mehreren Schichten von Punktematrizen bzw. Punkteverteilungen, die bei einer Beleuchtung mit einem vorzugsweise kohärenten Lichtstrahl zu einer Rekonstruktion der in dem Hologramm einkodierten Informationen führen. Die Punkteverteilung kann dabei als Amplitudenhologramm, Phasenhologramm oder als Kinoform berechnet sein. Zur Herstellung von computergenerierten Hologrammen werden diese zuerst berechnet und anschließend mit einer geeigneten Schreibvorrichtung durch punktweises Einbringen von Energie in ein Speichermedium eingeschrieben. Die Auflösung der dabei entstehenden Punktematrix kann im Bereich bis unterhalb von 1 µm liegen. Somit können auf engem Raum Hologramme mit einer hohen Auflösung geschrieben werden, deren Information erst durch Beleuchten mit einem Lichtstrahl und Rekonstruieren des Beugungsbildes ausgelesen werden können. Die Größe der Hologramme kann dabei zwischen weniger als 1 mm² und mehreren 1 cm² betragen.

Die zuvor beschriebenen computergenierten Hologramme können mit einer direkt sichtbaren Information kombiniert werden (Mikroschrift, Mikrobilder).

Ein großer Vorteil der computergenerierten Hologramme liegt darin, dass jedes Hologramm individuell berechnet werden kann. Somit können in Serie Hologramme erzeugt werden, die beispielsweise fortlaufende Nummern oder Produktionsparameter beinhalten. Derartige Hologramme können daher insbesondere als Sicherheitsmerkmale auf Verpackungen, Kreditkarten, Eintrittskarten oder ähnlichem eingesetzt werden. Mit einer geeigneten Auslesevorrichtung können die Sicherheitsmerkmale des Hologramms ausgelesen und die Authentizität und Individualität des Sicherheitsmerkmals kann in einfacher Weise überprüft werden.

Wenn im Folgenden das Schreiben oder Auslesen mit einem Lichtstrahl beschrieben wird, ist in der Regel ein Laserstrahl im sichtbaren Wellenlängenbereich gemeint. Dennoch ist die vorliegende Erfindung nicht auf die Anwendung sichtbaren Lichtes beschränkt. Im Prinzip kann die Erfindung mit elektromagnetischer Strahlung in einem weiten Wellenlängenbereich angewendet werden.

Des Weiteren ist im Folgenden unter einem Lichtfeld ein elektromagnetisches Feld zu verstehen, das durch die Angaben Amplitude, Wellenlänge, Phase und Ausbreitungsrichtung in einer Fläche bestimmt wird. Zur computergestützten Berechnung wird dazu die Fläche, in der Regel eine ebene Fläche, in einzelne Flächeneinheiten oder Pixel, meist in Form eines Rasters, eingeteilt und die Werte der Parameter des Lichtfeldes werden in jeder Flächeneinheit festgelegt. Die Gesamtheit aller Flächeneinheiten stellt dann das Lichtfeld dar.

Die computergenerierten Hologramme werden in der Regel für eine ebene Hologrammfläche berechnet, weil nur hierbei die schnellen Algorithmen der Fouriertransformation und anderer Transformationen eingesetzt werden können, um die Ausbreitung des Lichtfeldes zwischen der Hologrammfläche und der ebenen Rekonstruktionseben zu berechnen. Ein Beispiel einer Berechnung der Lichtausbreitung mittels Transformationen zeigt die WO 03/014837.

Daher werden die Hologramme auch auf ebenen Speichermedien angebracht und es wird einiger Aufwand getrieben, um das Speichermedium bzw. die Hologrammebene in einer Ebene zu halten. Dieses ist insbesondere dann aufwändig, wenn das Speichermedium auf einem flexiblen Material wie einem Etikett oder einem dünnen oder einem rauen Verpackungsmaterial befestigt ist.

Generell sind computergenerierte Hologramme anfällig gegenüber Formänderungen und damit verbundenen Änderungen des Einfallswinkels des Lesestrahls auf die Fläche. Diese Änderungen führen regelmäßig zu einer Verschlechterung der Qualität der Rekonstruktion bis hin zu Unleserlichkeit der Rekonstruktion.

Die zuvor angesprochenen ebenen Hologrammflächen müssen daher in einem Speichermedium mit einer großen Genauigkeit hergestellt und beibehalten werden. Abweichungen von der Ebene, betrachtet in Richtung der Flächennormalen, in der Größenordnung von mehr als 10 % der Wellenlänge des Lichtes haben bereits einen deutlichen Effekt auf die Qualität der Rekonstruktion. Abweichungen größer als eine halbe Wellenlänge bewirken bereits erhebliche Qualitätsverluste der Rekonstruktion. Abweichungen ab einer Wellenlänge von größer als einer Wellenlänge führen dann zu einer Unlesbarkeit des Hologramms. Wenn also im Folgenden von unebenen Hologrammflächen gesprochen wird, dann weisen die Hologrammflächen Abweichungen in der Größenordnung von mindestens 10 % der Wellenlänge des zum Auslesen verwendeten Lichtes, bevorzugt größer als eine halbe Wellenlänge und insbesondere größer als eine Wellenlänge. Die Abweichungen sind grundsätzlich nicht nach oben beschränkt, jedoch liegt ein praktikabler Bereich von Abweichungen von der Ebenheit unterhalb von 200 Wellenlängen.

Wird die Fläche des Hologramms bewusst uneben gewählt, dann entsteht eine nicht ohne zusätzlichen Aufwand auszugleichende Unschärfe in der Rekonstruktion. Ist die Fläche des Hologramms beispielsweise zylindrisch, dann entsteht eine Unschärfe in Richtung senkrecht zur Zylinderachse.

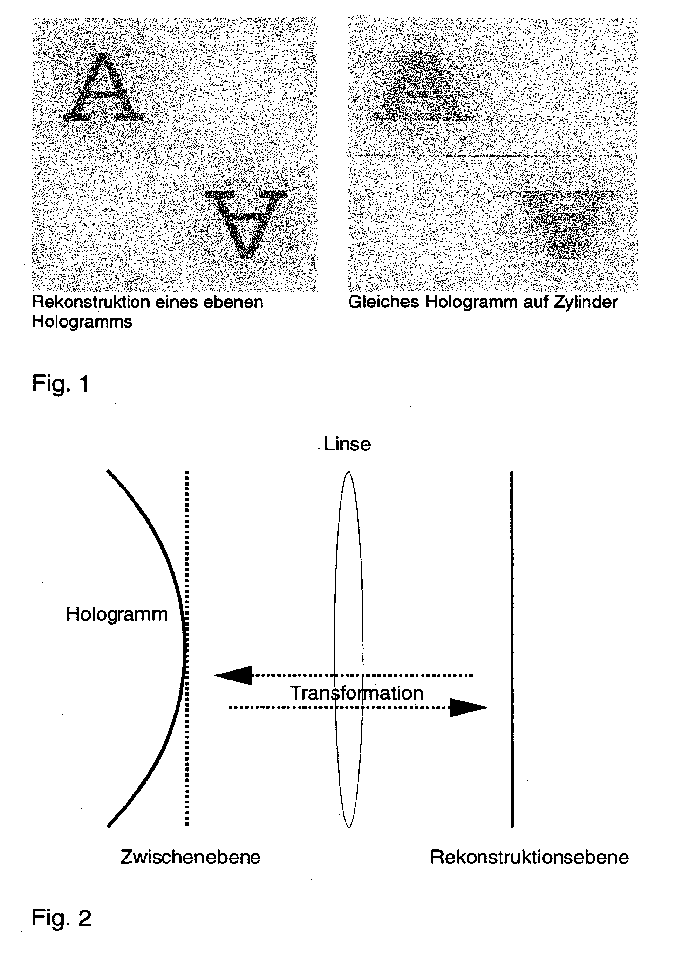

Dieses ist beispielhaft in Fig. 1 dargestellt. Im linken Teil ist die Rekonstruktion eines normalen ebenen Hologramms dargestellt, während im rechten Teil das gleiche Hologramm verwendet worden ist, das aber auf einer zylindrischen Fläche aufgebracht worden ist. Die Zylinderachse ist hierbei senkrecht und es ist eine deutliche Verschmierung der Rekonstruktion des Buchstabens "A" senkrecht zur Zylinderachse zu erkennen, die Rekonstruktion weist somit eine schlechte Auflösung quer zur senkrechten Zylinderachse auf. Die Darstellungen der Rekonstruktionen zeigen im Übrigen in der oberen linken Ecke jeweils die plus erste Ordnung und die untere rechte Ecke jeweils die minus erste Ordnung der Rekonstruktion.

Aus der Literatur ist es bekannt, dass die direkte Lichtausbreitung zwischen der unebenen Fläche des Hologramms und der Rekonstruktion vollständig berechnet wird. Diese Berechnung erlaubt aber nicht die Anwendung einer Fouriertransformation oder ähnlichen Transformation und ist daher sehr zeitaufwändig. Diese Berechnungsart kann daher beispielsweise nicht in einem Produktionsprozess mit einer hohen Taktrate verwendet werden, indem individuelle Hologramme berechnet und geschrieben werden.

In dem Artikel "Reconstruction in inclined planes of curved computer generated holograms", Applied Optics, OSA, Optical Society of America, Washington, Bd. 29, Nr. 32, S. 4761-4765, von dem die Erfindung ausgeht, schlägt der Autor, Christian Frere, eine Vereinfachung der Berechnung der Rekonstruktion von gebogenen computergenerierten Hologrammen vor. Dabei wird eine vor dem Hologramm angeordnete Zwischenebene definiert, und die Ausbreitung des Lichtfeldes zwischen dieser und der Rekonstruktionsebene mittels einer Transformation berechnet. Durch eine vereinfachende Annahme hinsichtlich der real gegebenen geometrischen Verhältnisse kann die Ausbreitung des Lichtfelds über die verbleibende Entfernung angenähert werden.

Aus dem Stand der Technik sind des Weiteren eine Mehrzahl von Schreibvorrichtungen zum Schreiben von computergenerierten Hologrammenbekannt, die in ebenen Speichermedien die optischen Strukturen der Hologramme einschreiben. Beispielhaft wird dazu auf die Druckschriften WO 02/079881, WO 02/079883, WO 02/084404, WO 02/084405 und WO 03/012549 hingewiesen.

Ebenso sind eine Mehrzahl von Lesevorrichtungen bekannt, die geeignet sind, durch Beleuchten der Hologrammfläche mittels eines Lichtstrahls und einer geeigneten Optik die Rekonstruktion sichtbar oder mittels Aufnahmemitteln elektronisch darstellbar und auswertbar zu machen. Beispielhaft wird dabei auf die Druckschriften DE 101 37 832, WO 02/084588 und WO 2005/111913 verwiesen.

Die genannten Schreib- und Lesevorrichtungen sind jeweils für ein Schreiben oder Lesen von ebenen Speichermedien beschrieben, können aber unter den im Folgenden beschriebenen Bedingungen für unebene Hologramme eingesetzt werden.

Die DE 102 36 891 offenbart ein gekrümmtes holographisch-optisches Speichermedium und ein Verfahren zu dessen Herstellung, bei dem ein computergeneriertes Hologramm in die photoempfindliche Schicht des Elementes einbelichtet wird. Dazu wird in einem ersten Schritt ein ebenes Hologramm der darzustellenden information berechnet, welches dann auf die gekrümmte Fläche transformiert wird. Für eine Rekonstruktion des Hologramms muss dann die in ebenem Zustand belichtete optische Schicht wieder in die gekrümmte Form gebracht werden, weil das Hologramm bei einer ebenen Form nicht auslesbar ist.

Der vorliegenden Erfindung liegt nun das technische Problem zugrunde, ein schnelleres Verfahren zum Berechnen eines auf einer unebenen Fläche anzuordnenden computergenerierten Reflexionshologramms anzugeben.

Die vorliegende Erfindung löst dieses technische Problem grundsätzlich dadurch, dass die durch die Unebenheit der Hologrammfläche entstehenden Laufzeitunterschiede des Lichtes und die daraus resultierenden Phasenverschiebungen verschiedener Bereiche des Lichtfeldes zueinander bei der Berechnung der Hologrammfunktion berücksichtigt werden. Das genannte grundlegende Prinzip kann auch als phasenangepasstes Berechnen der Hologrammfunktion bezeichnet werden.

Das zuvor aufgezeigte technische Problem wird also gemäß Anspruch 1 aufbauend auf einem Verfahren gelöst, bei dem eine vor dem Hologramm angeordnete Zwischenebene definiert wird, bei dem die Ausbreitung des Lichtfeldes zwischen der Rekonstruktionsebene und der Zwischenebene mittels einer Transformation berechnet wird und bei dem die Ausbreitung des Lichtfeldes zwischen der unebenen Hologrammfläche und der Zwischenebene abgeschätzt wird.

Der Vorteil des zuvor genannten Verfahrens besteht darin, dass der größte Teil der Lichtausbreitung zwischen der Rekonstruktionsebene und der Zwischenebene mittels der bekannten Transformationsverfahren berechnet werden kann, während der geringere Teil der Lichtausbreitung lediglich abgeschätzt wird. Dabei hat sich herausgestellt, dass die durch das Abschätzen in Kauf genommenen Ungenauigkeiten nicht zu einem Verlust an Auflösung bzw. Schärfe in der Rekonstruktion führen und dass die Berechnung mit einer hohen Geschwindigkeit durchgeführt werden kann.

Das Verfahren kann nun als Grundlage sowohl für die Berechnung der Hologrammfunktion, also der Phasen- und/oder Amplitudeninformation des computergenerierten Hologramms, ausgehend von einer vorgegebenen Rekonstruktion als auch zur Berechnung der Rekonstruktion in der Rekonstruktionsebene ausgehend von einer Hologrammfunktion und einer einfallenden Lichtwelle verwendet werden.

Bei dem erfindungsgemäßen Computerimplementierten Verfahren zum Berechnen eines computergenerierten auf einer unebenen Fläche angeordneten Hologramms gemäß Anspruch 1 kommt zu dem grundlegenden Verfahren ein weiterer Verfahrensteil hinzu
a) bei dem auf der Basis der zu rekonstruierenden Information das Lichtfeld in der Rekonstruktionsebene bestimmt wird und bei dem das Lichtfeld eines Lesestrahls in der unebenen Fläche des computergenerierten Hologramms bestimmt wird,
b) bei dem das Lichtfeld in der vor dem Hologramm angeordneten Zwischenebene aus der Ausbreitung des Lichtfeldes zwischen der Rekonstruktionsebene und der Zwischenebene berechnet wird und
c) bei dem das Lichtfeld in der unebenen Fläche des computergenerierten Hologramms ausgehend von der Zwischenebene abgeschätzt und das abgeschätzte Lichtfeld mit dem Lichtfeld des Lesestrahls überlagert wird, um die Phasen- und/oder Amplitudeninformation des Hologramms zu berechnen.

Bei einem nicht erfindungsgemäßen Verfahrenzum Berechnen einer Rekonstruktion eines computergenerierten auf einer unebenen Fläche angeordneten Hologramms, beleuchtet durch eine einfallende Lichtwelle, kommt zu dem grundlegenden Verfahrensteil ein weiterer Verfahrensteil hinzu,
d) bei dem das Lichtfeld einer einfallenden Lichtwelle in der unebenen Fläche des Hologramms durch eine Überlagerung des auftreffenden Lichtfeldes und der Phasen- und/oder Amplitudeninformation des Hologramms berechnet wird,
e) bei dem das Lichtfeld in der vor dem Hologramm angeordneten Zwischenebene ausgehend von der unebenen Fläche des Hologramms abgeschätzt wird und
f) bei dem das Lichtfeld in der Rekonstruktionsebene aus der Ausbreitung des Lichtfeldes zwischen der Zwischenebene und der Rekonstruktionsebene berechnet wird.

Des Weiteren kann man die einfallende Lichtwelle und die daraus resultierende Amplituden- und Phasenverteilung auf der Hologrammfläche durch eine weitere Ausgestaltung des Verfahrens berechnen,
g) bei dem das Lichtfeld eines Lesestrahls in der Zwischenebene berechnet oder festgelegt wird und
h) bei dem das auftreffende Lichtfeld des Lesestrahls in der unebenen Fläche des Hologramms ausgehend von der Zwischenebene abgeschätzt wird.

Das Lichtfeld in der Zwischenebene kann dabei durch eine Berechnung der Lichtausbreitung einer Lichtwelle bis hin zur Zwischenebene berechnet werden. Ebenso kann das Lichtfeld in der Zwischenebene als reine ebene Welle festgelegt, also durch Definition der Parameter des Lichtfeldes definiert werden.

Die zuvor beschriebenen Verfahren werden erfindungsgemäß dafür verwendet, um ein Reflexionshologramm zu berechnen. Denn bei einem Reflektionshologramm durchlaufen das Lichtfeld des Lesestrahls und das Lichtfeld der Rekonstruktion des Hologramms im wesentlichen das gleiche Raumvolumen, so dass die Berechnung der Lichtausbreitung gleichermaßen unter Anwendung der Aufteilung in einen Bereich zwischen unebener Hologrammfläche und Zwischenebene und zwischen der Zwischenebene und der Rekonstruktionsebene durchgeführt werden kann.

Erfindungsgemäß wird ein Phasendifferenzfeld aus der Wellenlänge des Lichtes und der Verteilung der Laufzeitunterschiede des Lichts zwischen der Zwischenebene und dem Hologramm auf der unebenen Fläche berechnet. Das Phasendifferenzfeld muss nur einmal berechnet werden und kann für jeden Durchlauf des Verfahrens wieder verwendet werden.

Danach wird im Schritt c) das Lichtfeld in der unebenen Fläche des Hologramms durch eine Überlagerung des Lichtfeldes in der Zwischenebene mit dem Phasendifferenzfeld abgeschätzt. Diese Überlagerung wird abhängig von der Ausbreitungsrichtung des Lichtfeldes und der berechneten Phasendifferenz in Form einer Addition oder Subtraktion des Phasendifferenzfeldes vorgenommen.

Die Abschätzung reduziert sich also auf eine reine Addition bzw. Subtraktion zweier Phasenfelder und stellt somit keinen die Geschwindigkeit der Berechnung begrenzenden Faktor dar.

Beim nicht erfindungsgemäßen Verfahren kann im Schritt e) das Lichtfeld in der Zwischenebene durch eine Überlagerung des Lichtfeldes in der unebenen Fläche des Hologramms mit einem Phasendifferenzfeld abgeschätzt werden.

Dasselbe gilt beim erfindungsgemäßen Verfahren für Schritt h), wobei dort das Lichtfeld in der unebenen Fläche des Hologramms durch eine Überlagerung des Lichtfeldes in der Zwischenebene mit einem Phasendifferenzfeld abgeschätzt werden kann.

Eine Besonderheit der Abschätzung mit einem Phasendifferenzfeld ist, dass die Werte des Phasendifferenzfelds nur von den Abständen der Punkte der Zwischenebene zur unebenen Fläche und von der beim Lesen des Hologramms verwendeten Wellenlänge abhängen. Wenn mit dem obigen Verfahren ein Hologramm für eine bestimmte unebene Fläche und eine bestimmte Wellenlänge des Lesestrahls berechnet wird, wenn weiterhin dieses Hologramm auf eine unebene Fläche aufgebracht wird, die eine um einen Proportionalitätsfaktor kleinere Modulationstiefe der Abstände zur Zwischenebene gegenüber der ursprünglichen unebenen Fläche besitzt, so kann das Hologramm zwar nicht mehr mit einem Lichtstrahl der ursprünglichen Wellenlänge gelesen werden, jedoch mit einem Lichtstrahl, dessen Wellenlänge um den obigen Proportionalitätsfaktor verkürzt ist.

Des Weiteren ist es bevorzugt, dass das Lichtfeld des Lesestrahls in der Zwischenebene als ebene Welle festgelegt wird und dass der Lesestrahl in der Berechnung durch eine Verdopplung des Phasendifferenzfeldes zwischen der Zwischenebene und der Hologrammfläche berücksichtigt wird und das Lichtfeld des Lesestrahls im Weiteren ignoriert wird. Dieser gerade bei der Berechnung eines Reflektionshologramms auftretende Effekt kann also zu einer sehr effektiven Berechnung der Lichtausbreitung eingesetzt werden.

Bei der Ausgestaltung der unebenen Hologrammfläche ist es bevorzugt, dass die unebene Fläche mittels einer mathematischen und/oder numerischen Funktion berechnet oder angenähert werden kann. Dann ist es ohne weiteres möglich, die Unebenheit der Fläche in den Algorithmus einzubinden, ohne dass es zu einer weiteren Einbuße an Genauigkeit kommt. Daher kann die beschriebenen Verfahren zunächst in vorteilhafter Weise bei Zylinderflächen, sphärischen Flächen, parabolischen Flächen, sinusoidalen Flächen oder Kombinationen dieser Flächentypen angewendet werden. Die genannten Flächentypen lassen sich mathematisch exakt darstellen und benötigen keine Näherung. Des Weiteren können Hologramme auch auf unregelmäßig unebenen Flächen berechnet werden, solange die Oberfläche in geeigneter Weise erfasst und in eine numerische Funktion mit ausreichender örtlicher Auflösung übertragen werden kann.

Die nachfolgende Beschreibung der Erfindung anhand einer zylindrischern Fläche stellt eine Vereinfachung der Beschreibung dar, ist aber nicht als beschränkend für die Beschreibung der Erfindung zu verstehen.

Bei einer weiteren bevorzugten Ausgestaltung der Erfindung wird die durch ein im Strahlengang angeordnetes optisches Element hervorgerufene Phasenverschiebung berücksichtigt. Dadurch kann beispielsweise bei einer zylinderförmigen Fläche des Hologramms eine Zylinderlinse im Strahlengang angeordnet sein, die zumindest teilweise die Phasenverschiebung des Phasendifferenzfeldes ausgleicht. In diesem Fall werden die Phasendifferenzen kleiner ausfallen, die bei der abschätzenden Berechnung des Lichtfeldes auf der unebenen Hologrammfläche bzw. in der Zwischenebene berücksichtigt werden.

Die Berechnung der Ausbreitung des Lichtfeldes zwischen der Rekonstruktionsebene und der vor dem Hologramm angeordneten Zwischenebene kann mit Hilfe der bekannten Transformationen, insbesondere einer Fouriertransformation, einer Fast-Fourier-Transformation, einer Fresneltransformation oder einer Nahfeldlösung berechnet werden.

Ebenso können mit dem Verfahren die Hologramme in den bekannten Formaten berechnet werden. Insbesondere sind dieses Amplituden- und Phasenhologramme sowie Kinoforms, als Grauwertverteilungen oder als binäre Verteilungen realisiert, in nichtoptimierter oder optimierter Form berechnet, für den Fourier-, Fresnel- oder Nahfeldbereich.

Die Hologramme können während der Berechnung kodiert werden, wobei insbesondere eine Kodierung als Amplitudenhologramm, als Phasenhologramm oder als eine Kombination aus Amplituden- und Phasenhologramm angewendet werden kann. Insbesondere kann auch binäre Kodierung eingesetzt werden, die leicht in einem Schreibvorgang mit einem der an sich bekannten Schreibvorrichtungen hergestellt werden kann.

Wegen der vorangehend beschriebenen hohen Berechnungsgeschwindigkeit kann auch bei der vorliegenden Erfindung ein Optimierungsalgorithmus zur Berechnung des Hologramms verwendet werden. Trotz der erhöhten Rechendauer kann eine solche Optimierung eingesetzt werden, um in Real-time Daten zu individualisierten computergenerierten Hologrammen auf unebenen Flächen zu berechnen. Zur Optimierung des Hologramms können ein generalisierter Gerchberg-Saxton Algorithmus als iterative Optimierung oder ein Direct Binary Search als nicht-iterative Optimierung verwendet werden. Diese Techniken sind an sich bekannt, werden aber erstmals bei der Berechnung von Hologrammen auf unebenen Flächen angewendet.

Das oben aufgezeigte technische Problem wird erfindungsgemäß auch durch ein Verfahren zum Herstellen eines computergenerierten Hologramms auf einer unebenen Fläche gemäß Anspruch 8 gelöst.

Dadurch ist es erstmals möglich, in kurzen Zeitabständen individuelle computergenerierte Hologramme beispielsweise für eine zylindrische Fläche zu berechnen, die zunächst in ein eben angeordnetes Speichermedium eingeschrieben werden, um dann auf einen zylindrischen Gegenstand aufgebracht zu werden.

Eine weitere Möglichkeit besteht darin, dass das Hologramm zur Qualitätskontrolle vom ebenen Speichermedium ausgelesen und rekonstruiert wird, wobei die fehlende Unebenheit der Hologrammfläche beim Auslesen vom ebenen Speichermedium unter Zuhilfenahme eines optischen Mittels, beispielsweise einer sphärischen Linse oder einer Zylinderlinse erzeugt wird.

Bei einem Speichermedium für ein computergeneriertes Hologramm, das mindestens eine unebene Materialschicht aufweist, in der das Hologramm eingeschrieben ist, kann das Hologramm mit einem der zuvor beschriebenen Verfahren berechnet worden sein. Bei dem Speichermedium führt die Rekonstruktion des Hologramms zu einer Rekonstruktion der Information des Hologramms in einer Ordnung, beispielsweise der plus ersten Ordnung, die im Vergleich mit der Rekonstruktion in der gleichen Ordnung mit umgekehrten Vorzeichen, beispielsweise der minus ersten Ordnung, eine bessere Auflösung besitzt.

Unter Auflösung wird dabei verstanden, dass die Schärfe der Darstellung unterschiedlich ist, also unterschiedlich viele Details der Rekonstruktion der holographisch gespeicherten Information zu erkennen sind. Man kann auch davon sprechen, dass die Darstellung der Rekonstruktion in der positiven und negativen Ordnung unterschiedlich stark verschmiert sind. Siehe dazu auch die Diskussionen zur Auflösung der Rekonstruktionen im Zusammenhang mit den Fig. 1, 7 bis 10 und 12.

Die Unebenheit der Materialschicht des Speichermediums, also der Fläche des Hologramms kann in zweifacher Weise erzeugt werden. Zum einen kann das Speichermedium aus einem flexiblen Material bestehen und von eine ebenen Erstreckung in eine unebene, beispielsweise gekrümmte zylindrische oder sphärische Form gebracht werden. Dieses ist beispielsweise bei klebenden Etiketten der Fall, die auf einen zylindrischen oder sphärischen Oberflächenabschnitt eines Werkstückes aufgebracht werden.

Zum anderen kann in einem an sich ebenen Speichermedium durch partiellen Abtrag eines Teils einer Oberfläche eine Unebenheit erzeugt werden, in deren unebene Fläche danach eine Punkteverteilung eines Hologramms eingeschrieben wird. Somit ist nicht das Speichermedium an sich, sondern nur ein Teil einer Oberfläche uneben.

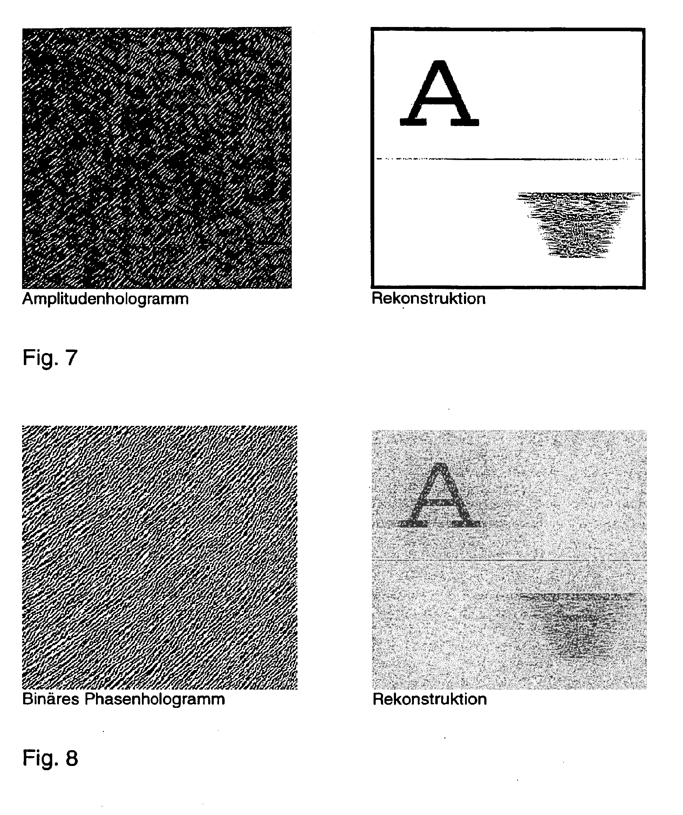

Das sich daraus ergebende charakteristische Bild ist leicht zu erkennen, da in einem Teil der Rekonstruktion eine scharfe Wiedergabe der Informationmit guterAuflösung erfolgt, während die andere Wiedergabe in der Ordnung mit dem entgegengesetzten Vorzeichen unscharf ist, also eine geringere Auflösung aufweist. Dieses wird in der speziellen Beschreibung der Fig. 7 bis 10 und 12 näher erläutert.

Wie oben bereits erläutert worden ist, kann die unebene Fläche mittels einer mathematischen und/oder numerischen Funktion berechnet oder angenähert werden. Dadurch ist es möglich, die computergestützte Berechnung durchzuführen. Insbesondere ist dabei - wie bereits erwähnt - die unebene Fläche eine Zylinderfläche, eine sphärische Fläche, eine parabolische Fläche oder eine sinusoidale Fläche.

Eine Vorrichtung zum Rekonstruieren eines auf einer unebenen Fläche eines Speichermediums angeordneten computergenerierten Hologramms weist eine Lichtquelle und Aufnahmemittel zum Aufnehmen der Rekonstruktion auf. Im Strahlengang zwischen der Lichtquelle und den Aufnahmemitteln ist ein optisches Element zum zumindest teilweisen Ausgleich der unebenen Fläche vorgesehen. Somit kann die optische Wirkung des optischen Elements die durch die unebene Fläche des Hologramms entstehende Phasenverschiebung zumindest teilweise ausgeglichen werden.

Gleicht das optische Element die durch die unebene Fläche entstehenden Phasenverschiebungen vollständig aus, so kann das Hologramm in herkömmlicher Weise berechnet und in das Speichermedium eingeschrieben werden. Ein - wie oben beschriebenes - Phasendifferenzfeld braucht dann nicht bei der Berechnung des Hologramms berücksichtig zu werden.

Dagegen ist aber auch eine Kombination möglich, wenn das auf dem Speichermedium angeordnete Hologramm unter teilweiser Berücksichtigung der durch die Unebenheit der Hologrammfläche entstehenden Phasenverschiebungen berechnet worden ist und wenn das optische Element die unebene Fläche ebenfalls teilweise ausgleicht. Dadurch kommt es insgesamt zu einem vollständigen Ausgleich der Phasenverschiebungen und die beschriebene Vorrichtung ist in der Lage, das unebene Hologramm auszulesen.

Es gibt verschiedene Varianten der Anordnung des optischen Elementes im Strahlengang der Vorrichtung. Diese werden in der nachfolgenden Beschreibung von Ausführungsbeispielen näher beschrieben.

Die Erfindung wird im Folgenden anhand von Ausführungsbeispielen näher erläutert, wozu auf die beigefügte Zeichnung Bezug genommen wird. In der Zeichnung zeigen
- Fig. 1: eine Rekonstruktion eines für eine ebene Hologrammfläche berechneten Amplitudenhologramms und eine Rekonstruktion für das gleiche Hologramm, wenn es eine zylinderförmige Oberflächenform annimmt,
- Fig. 2: eine schematische Darstellung zur Erläuterung der in der Beschreibung des Verfahrens zum Berechnen eines computergenerierten Hologramms und zum Berechnen der daraus entstehenden Rekonstruktion verwendeten Begriffe,
- Fig. 3: eine Darstellung eines Phasendifferenzfeldes für eine zylinderförmige Hologrammfläche,
- Fig. 4: eine Darstellung der Rücktransformation ausgehend von der Rekonstruktion zur unebenen Hologrammfläche,
- Fig. 5: eine Darstellung der Transformation ausgehend von der unebenen Hologrammfläche zur Rekonstruktion,
- Fig. 6: eine Darstellung der Rücktransformation einer ebenen Welle in der Zwischenebene in die unebene Hologrammfläche,
- Fig. 7: ein für eine zylinderförmige Hologrammfläche berechnetes Amplitudenhologramm und dessen berechnete Rekonstruktion,
- Fig. 8: ein für eine zylinderförmige Hologrammfläche berechnetes binäres Phasenhologramm und dessen berechnete Rekonstruktion,
- Fig. 9: ein für eine zylinderförmige Hologrammfläche berechnetes optimiertes binäres Phasenhologramm und dessen berechnete Rekonstruktion,
- Fig. 10: ein für eine zylinderförmige Hologrammfläche berechnetes Fresnel-Amplitudenhologramm und dessen berechnete Rekonstruktion,
- Fig. 11: eine Darstellung eines Phasendifferenzfeldes für eine sphärische Hologrammfläche,
- Fig. 12: ein für eine sphärische Hologrammfläche berechnetes Amplitudenhologramm und dessen berechnete Rekonstruktion,
- Fig. 13: eine erste Lesevorrichtung für Hologramme, die auf einer unebenen Fläche eines Speichermediums angeordnet sind,
- Fig. 14: eine zweite Lesevorrichtung für Hologramme, die auf einer unebenen Fläche eines Speichermediums angeordnet sind, und
- Fig. 15: eine dritte Lesevorrichtung für Hologramme, die auf einer unebenen Fläche eines Speichermediums angeordnet sind.

Im Folgenden wird zunächst die Ausgangssituation der vorliegenden Erfindung anhand der Fig. 1 erläutert. Anschließend werden die erfindungsgemäßen Verfahren sowie die Lesevorrichtungen im Detail erläutert.

Fig. 1 zeigt eine bekannte Rekonstruktion eines computergenerierten Hologramms, das vorliegend die Abbildung des Buchstabens "A" beinhaltet. Die linke Hälfte der Fig. 1 zeigt die Rekonstruktion des Hologramms, während sich das Hologramm in einer ebenen Position befindet. Ebene Position bedeutet dabei, dass die die Hologramminformation enthaltenden Materialschicht des Speichermediums im Wesentlichen in einer Ebene angeordnet ist.

In der rechten Hälfte ist die Rekonstruktion des gleichen Hologramms dargestellt, wobei die die Hologramminformation tragende Materialschicht des Speichermediums eine zylindrische Form angenommen hat. Beispielsweise ist das an sich ebene Speichermedium auf einer zylindrischen Oberfläche eines Werkstückes aufgebracht worden, wobei in der Darstellung der Fig. 1 die Zylinderachse senkrecht ausgerichtet ist.

Die Darstellung in Fig. 1 rechts zeigt, dass die Rekonstruktion des Buchstabens "A" in plus erster Ordnung und in minus erster Ordnung auseinander gezogen ist, wobei das Auseinanderziehen bzw. Verschmieren senkrecht zur Achse des Zylinders erfolgt. Eine scharfe Rekonstruktion des Hologramms ist daher nicht möglich, man kann gerade noch den großen Buchstaben "A" erkennen. Eine feinere Details aufweisende Informationen, beispielsweise eines Barcodes oder einer kleineren Schrift, wären nicht mehr zu erkennen. Die Auflösung der Rekonstruktionen in plus und minus erster Ordnung ist also gleich schlecht.

Fig. 2 zeigt nun eine schematische Darstellung zur Erläuterung der Verfahren.

Das Verfahren zum Berechnen eines computer generierten auf einer unebenen Fläche angeordneten Hologramms unterteilt den Raum zwischen Hologrammfläche und Rekonstruktionsfläche in zwei Teilbereiche.

In einem ersten Teilbereich zwischen der Rekonstruktionsebene und einer gedachten Zwischenebene, die mit kurzem Abstand vor der zylinderförmigen Hologrammfläche angeordnet ist, wird eine an sich bekannte Transformation, beispielsweise eine Fouriertransformation angewendet, um die Propagation des Lichtfelds zwischen den beiden Ebenen zu berechnen. Hierbei können bekannte Algorithmen eingesetzt werden, in diesem Beispiel die Fast-Fouriertransformation, um die Berechnungszeit zu verkürzen.

In einem zweiten Teilbereich zwischen der Zwischenebene und der unebenen, vorliegend zylindrischen Hologrammfläche wird dagegen die Lichtausbreitung abgeschätzt und nicht berechnet. Das Verfahren zum Berechnen eines computer generierten auf einer zylindrischen Fläche angeordneten Hologramms umfasst also die folgenden Schritte:
a) auf der Basis der zu rekonstruierenden Information "A" wird das Lichtfeld in der Rekonstruktionsebene bestimmt und das Lichtfeld eines Lesestrahls wird in der unebenen Fläche des computergenerierten Hologramms bestimmt.

b) das Lichtfeld in der Zwischenebene wird aus der Ausbreitung des Lichtfeldes zwischen der Rekonstruktionsebene und der Zwischenebene mittels einer Transformation berechnet, und
c) das Lichtfeld in der zylindrischen Hologrammfläche wird ausgehend vom Lichtfeld in der Zwischenebene abgeschätzt und das abgeschätzte Lichtfeld wird mit dem Lichtfeld des Lesestrahls überlagert, um die Phasen- und/oder Amplitudeninformation des Hologramms zu berechnen.

Statt einer exakten, aber sehr zeitaufwändigen Berechnung der Propagation des Lichtfeldes von jedem Punkt der Rekonstruktion zur jedem Punkt des Hologramms wird also der größte Teil des Raumes zwischen Rekonstruktion und Hologramm durch eine rechenzeitoptimierte Transformation berechnet und ein geringer Teil der Lichtausbreitung wird mit einer geeigneten Methode abgeschätzt. Durch Wahl einer geeigneten Abschätzung kann somit die Rechenzeit zur Berechnung jedes zylindrischen Hologramms so gering gehalten werden, dass mit herkömmlichen Rechnern in kurzen Zeittakten von weniger als 1 sec einzelne Hologramme berechnet und anschließend geschrieben werden können.

In Fig. 2 ist im ersten Teilbereich zwischen der Zwischenebene und der Rekonstruktionsebene eine bikonvexe Linse dargestellt. Dieses soll zeigen, dass diese Linse für die Abbildung der Rekonstruktion verwendet wird, wenn das zylindrische Hologramm mittels einer Fouriertransformation berechnet worden ist. Wird dagegen das Hologramm beispielsweise mittels einer Fresneltransformation berechnet, dann ist die Linse nicht erforderlich.

Zur Abschätzung der Propagation des Lichtfeldes im zweiten Teilbereich zwischen der Zwischenebene und der zylindrischen Hologrammfläche wird ein Phasendifferenzfeld aus der Wellenlänge des Lichtes und der Verteilung der Laufzeitunterschiede des Lichts zwischen der Zwischenebene und dem Hologramm auf der unebenen Fläche berechnet. Da der Raum im zweiten Teilbereich im Vergleich zum ersten Teilbereich relativ gering ist, führt diese Abschätzung zu einem guten Ergebnis bei der Rekonstruktion des so gewonnenen Hologramms.

Denn im oben beschriebenen Schritt c) des Verfahrensablaufes wird das Lichtfeld in der unebenen Fläche des Hologramms durch eine Überlagerung des Lichtfeldes in der Zwischenebene mit dem Phasendifferenzfeld abgeschätzt. Bei der Anwendung auf eine zylindrische Hologrammfläche liegt dem Verfahren die Idee zugrunde, dass die quer zur Zylinderachse verlaufenden Bereiche der Hologrammfläche mit wachsendem Abstand zur Achse einen steigenden Abstand zur Zwischenebene aufweisen. Dieser Abstand kann anhand der Wellenlänge des Lichtes des zu verwendenden Lesestrahls und der berechenbaren Laufzeitunterschiede in eine Phasendifferenzverteilung bzw. in ein Phasendifferenzfeld umgerechnet werden.

Bei der Berechnung der Hologrammfunktion, also der in das Speichermedium zu schreibenden Punkteverteilung kann darüber hinaus berücksichtigt werden, dass aufgrund der Krümmung der Hologrammfläche bei einer Betrachtung in Richtung der Propagation des Lesestrahls je nach Winkelabweichung der Fläche von 90° das Rastermaß der Punkteverteilung enger wird. Bei kleinen Winkeln ist die Abweichung zwar gering, aber rechnerisch kann die Änderung des Rastermaßes leicht berücksichtigt werden und führt zu einer weiteren Verbesserung der Qualität der Rekonstruktion.

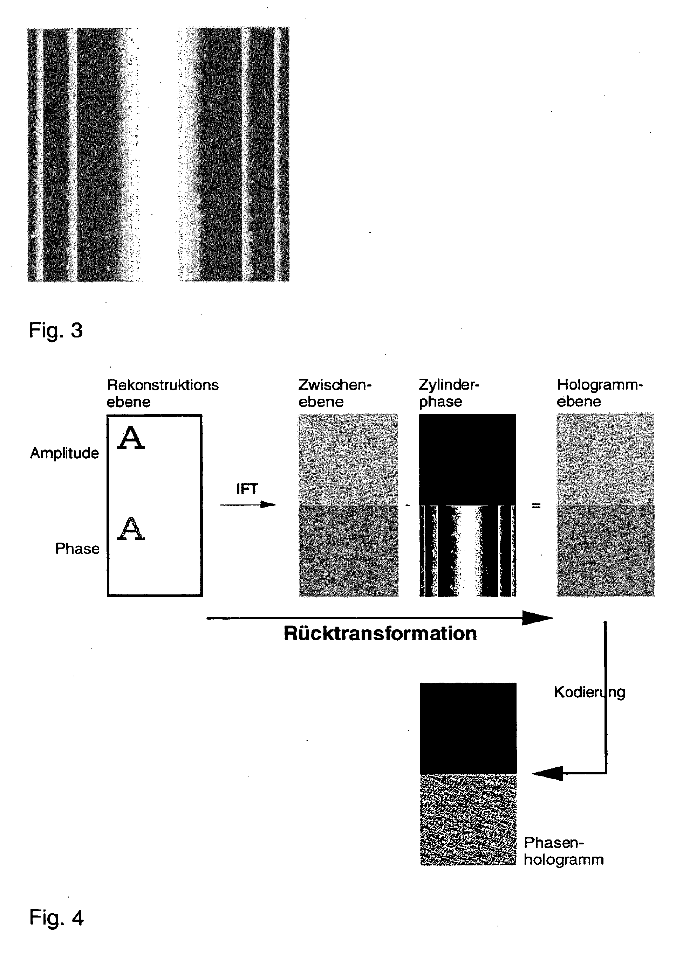

Fig. 3 zeigt ein solches Phasendifferenzfeld für eine zylindrische Hologrammfläche. Die nach außen immer enger aneinanderliegenden Streifen sind deutlich zu erkennen. Der Abstand zwischen jeweils zwei weißen Streifen entspricht dabei einer Wellenlänge des Lichtes.

Fig. 4 zeigt ein Beispiel des Verfahrensablaufes zur Berechnung der Hologrammfunktion des computergenerierten Hologramms auf einer zylindrischen Oberfläche.

Ausgehend von der links dargestellten Rekonstruktionsebene mit der oben dargestellten Amplitudeninformation und der unten dargestellten Phaseninformation, die nur dort von Null verschiedene Werte annehmen kann, wo auch eine Amplitude vorliegt, wird mittels einer Inversen Fourier-Transformation IFT die Lichtausbreitung bis zur Zwischenebene berechnet, wobei an dieser Stelle wieder die oben dargestellte Amplitudenverteilung und die unten dargestellte Phasenverteilung erhalten wird.

Davon wird das in Fig. 3 dargestellte Phasendifferenzfeld der Zylinderphase abgezogen, während die Amplitudenverteilung unverändert bleibt. Somit erhält man die Amplituden- und Phaseninformation in der Hologrammebene.

Wie Fig. 4 weiter zeigt, kann die in der Hologrammebene erhaltene Amplituden- und Phasenverteilung zu einer reinen Phasenverteilung eines Phasenhologramms mit gleichverteilter Amplitudeninformation kodiert werden. Ein solches Hologramm kann dann in bekannter Weise in ein Speichermedium eingeschrieben werden.

Mit der zuvor beschriebenen grundlegenden Idee der Abschätzung der Propagation des Lichtfeldes in dem zweiten Teilbereich zwischen der Zwischenebene und der zylindrischen Hologrammfläche kann auch ein Verfahren zum Berechnen einer Rekonstruktion eines computergenerierten auf einer unebenen Fläche angeordneten Hologramms durch eine einfallende Lichtwelle durchgeführt werden. Dieses Verfahren weist die Schritte auf:
d) das Lichtfeld einer einfallenden Lichtwelle in der zylindrischen Hologrammfläche wird durch eine Überlagerung des auftreffenden Lichtfeldes und der Phasen- und/oder Amplitudeninformation des Hologramms berechnet,
e) das Lichtfeld in der Zwischenebene wird ausgehend von der unebenen Fläche des Hologramms abgeschätzt und
f) das Lichtfeld in der Rekonstruktionsebene wird aus der Ausbreitung des Lichtfeldes zwischen der Zwischenebene und der Rekonstruktionsebene berechnet.

Auch hier kann die Abschätzung auf der Basis eines Phasendifferenzfeldes durchgeführt werden, wie es zuvor beschrieben worden ist.

Im Schritt e) wird dann das Lichtfeld in der Zwischenebene durch eine Überlagerung des Lichtfeldes in der zylindrischen Hologrammfläche mit dem Phasendifferenzfeld gemäß Fig. 3 abgeschätzt.

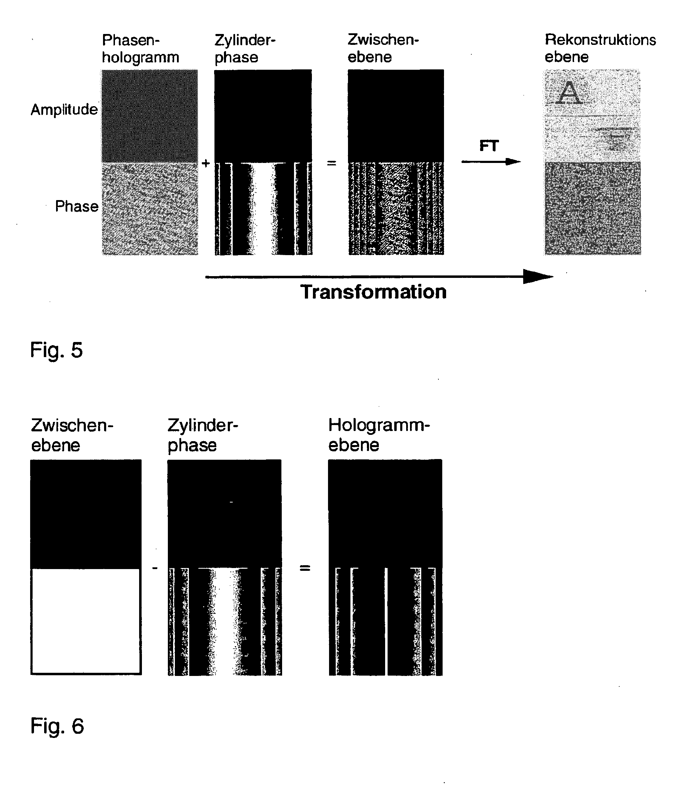

Fig. 5 zeigt ein Beispiel des zuvor beschriebenen Verfahrensablaufes. Ausgangspunkt ist die links dargestellte Amplituden- und Phaseninformation des Lichtfeldes in der zylindrischen Hologrammfläche. Die Amplitude ist über die Fläche des Lichtfeldes gleichmäßig verteilt, während die Phase eine ungleichmäßige Verteilung über das Lichtfeld aufweist.

Zu dieser Phaseninformation wird das Phasendifferenzfeld als Zylinderphase hinzuaddiert, so dass sich die Amplituden- und Phaseninformation in der Zwischenebene ergibt.

Ausgehend von der Amplituden und Phaseninformation des Lichtfeldes in der Zwischenebene wird mittels einer Fouriertransformation das Lichtfeld in der Rekonstruktionsebene berechnet. In der Amplitudeninformation ergibt sich dann die Rekonstruktion des Buchstabens "A" in plus und minus erster Ordnung.

Ein bevorzugter einleitender Schritt für das zuvor beschriebene Verfahren besteht in Folgendem:
g) das Lichtfeld eines Lesestrahls, insbesondere eines Laserstrahls in Form einer ebenen Welle, wird in der vor dem Hologramm angeordneten Zwischenebene berechnet oder festgelegt und
h) das auf der zylindrischen Hologrammfläche auftreffende Lichtfeld wird ausgehend von der Zwischenebene abgeschätzt.

Dazu kann im Schritt h) das Lichtfeld in der zylindrischen Hologrammfläche durch eine Überlagerung des Lichtfeldes in der Zwischenebene mit dem zylindrischen Phasendifferenzfeld gemäß Fig. 3 abgeschätzt werden.

Diese Vorgehensweise ist in Fig. 6 dargestellt, die ähnlich wie in Fig. 3 ein in Richtung auf die Hologrammfläche gerichtete Propagation eines Lichtfeldes zeigt. Hier ist die einfallende ebene Welle mit einer gleichmäßig verteilten Amplitudeninformation (schwarz) und mit einer gleichmäßigen Phaseninformation (weiß) dargestellt, von der das zylindrische Phasendifferenzfeld abgezogen wird. Es ergibt sich ein Lichtfeld entsprechend mit einer gleichmäßigen Amplitudenverteilung mit der zylindrischen Phasenverteilung. Dieses Lichtfeld kann dann zur Berechnung der Rekonstruktion des Hologramms, wie oben dargestellt, verwendet werden.

Dementsprechend wird bei der ausgehend von einer ebenen Welle durchgeführten Berechnung der Rekonstruktion das Phasendifferenzfeld zwei Mal dem Lichtfeld hinzugefügt.

Im Übrigen werden in den Fig. 3 bis 5 die Inverse Fouriertransformation und die Fouriertransformation sowie einmal das Subtrahieren und einmal das Addieren des Phasendifferenzfeldes dargestellt und beschrieben. Dieses beruht auf der - beliebig gewählten - Konvention der Ausbreitungsrichtung des Lichtes bei der Durchführung der Berechnung. Dreht man per Konvention die Lichtausbreitung um, dann werden die Rechenoperation entsprechend umgekehrt.

Das Hologramm in Fig. 3 ist für einen bestimmten Zylinderradius r₁ und eine bestimmte Wellenlänge λ₁ des Lesestrahls berechnet. Wird dieses Hologramm nun auf eine Zylinderfläche mit Radius r₂ aufgebracht, wird die Rekonstruktion bei gleicher Lesewellenlänge unscharf. Da bei einer Zylinderfläche die Abstände zwischen einer Zwischenebene und der Zylinderfläche näherungsweise proportional zum Inversen des Radius sind, wird durch Verwendung einer anderen Wellenlänge λ₂ = r₁/r₂ λ₁ beim Lesen die Rekonstruktion scharf. Somit können im Falle des Zylinders verschiedene Radien durch eine einzige Berechnungsart mit einem einzigen Radius abgedeckt werden, wenn beim Lesen die Wellenlängen auf den Radius angepasst werden. Diese Aussage gilt analog für sphärische Flächen.

Bei einer weiteren Ausgestaltung des bisher beschriebenen Verfahrens wird die durch ein im Strahlengang angeordnetes optisches Element hervorgerufene Phasenverschiebung bei der Berechnung der Hologrammfunktion berücksichtigt. Dieser Fall tritt ein, wenn eine Auslesevorrichtung zum Auslesen von auf einer zylindrischen Oberfläche angeordneten Hologrammen, die weiter unten näher beschrieben wird, eine Zylinderlinse aufweist, die nur zum Teil die zylindrischen Phasenverschiebung ausgleicht. Dann verbleibt ein Rest an Zylinderphase, der bei der Berechnung berücksichtigt werden muss.

Beispielsweise kann die zylindrische Hologrammfläche einen Radius r₁ von 3 mm aufweisen. Im Strahlengang des Auslesestrahls ist eine Zylinderlinse mit einem Radius r₂ von 4 mm vorhanden. Die restliche Zylinderwirkung muss mit einem Phasendifferenzfeld ausgeglichen werden, das auf einem Radius r₃ von 12 mm beruht. Dieser Wert berechnet sich aus der Differenz der reziproken Werte der Radien 1/r₁ - 1/r₂ = 1/r₃. In die Berechnung der Hologrammfunktion bzw. der Rekonstruktion geht dann nur ein Phasendifferenzfeld auf der Basis eines Zylinders mit einem Radius von 12 mm ein, während bei der oben beschriebenen Berechnung ohne Zylinderlinse im Strahlengang ein Phasendifferenzfeld auf der Basis eines Zylinders mit einem Radius von 3 mm berücksichtigt worden ist.

In den Fig. 7 bis 10 sind verschiedene Hologramme und deren Rekonstruktionen dargestellt, wobei sich die Hologramme in ihrer Berechnung unterscheiden, aber jeweils die gleiche zylindrische Hologrammoberfläche verwenden.

Fig. 7 zeigt in der linken Hälfte ein Amplitudenhologramm, das mit einer feinstufigen Graustufenverteilung berechnet worden ist. Daher ist die Information in der Hologrammfunktion weitgehend erhalten geblieben, was sich an der Reproduktion erkennen lässt, die außer der reproduzierten Information nur ein geringes Rauschen erkennen lässt.

Die Reproduktion zeigt ein charakteristisches Merkmal des unebenen, hier zylindrischen Hologramms, indem die oben links dargestellte plus erste Ordnung das weitgehend scharfe Bild des Buchstabens "A" erkennen lässt, während die unten rechts dargestellte unscharfe Reproduktion die minus erste Ordnung wiedergibt. Die minus erste Ordnung ist also erheblich unschärfer als die Reproduktion in der plus ersten Ordnung, sie zeigt also eine erheblich schlechtere Auflösung. Dabei ist die Unschärfe in der Reproduktion quer zur Zylinderachse, die entsprechend der in den Fig. 7 bis 10 gewählten Darstellung senkrecht verläuft. Dieses steht im Übrigen in Übereinstimmung mit der Darstellung gemäß Fig. 1, die oben als Ausgangspunkt erläutert worden ist.

Vergleicht man die minus erste Ordnung von Fig. 7 mit der minus ersten Ordnung in Fig. 1, so ist zu erkennen, dass die Unschärfe bei der Reproduktion gemäß Fig. 7 deutlich größer geworden ist. Dagegen ist aber im Vergleich zu Fig. 1 bei der plus ersten Ordnung ein erheblicher Schärfegewinn festzustellen.

Fig. 8 zeigt ein binäres Phasenhologramm, das aus der oben beschriebenen Berechnung durch eine Kodierung entstanden ist, die im Zusammenhang mit der Fig. 4 bereits erläutert worden ist. Die Kodierung bedeutet das Überführen der berechneten Hologrammfunktion, also der berechneten Amplituden- und Phaseninformationen in eine quantisierte Funktion in Amplitude oder Phase. Von einem binären Phasenhologramm spricht man daher, wenn die berechnete Hologrammfunktion in ein aus einzelnen Punkten bestehenden Raster umgerechnet worden ist, wobei die Punkte entweder eine Phasenverschiebung von 0 oder aufweisen, wobei Werte im Intervall zwischen 0 und 2 annehmen kann.

Bei der in der rechts dargestellten Reproduktion des binären Phasenhologramms ist erneut ein scharfer Buchstabe "A" in der oben links dargestellten plus ersten Ordnung zu erkennen, während die minus erste Ordnung deutlich unschärfer und quer zur Zylinderachse verschmierter ist. Im Vergleich zur Darstellung in Fig. 7 ist in der Reproduktion ein deutliches Rauschen zu erkennen, was aufgrund der Binarisierung entstanden ist.

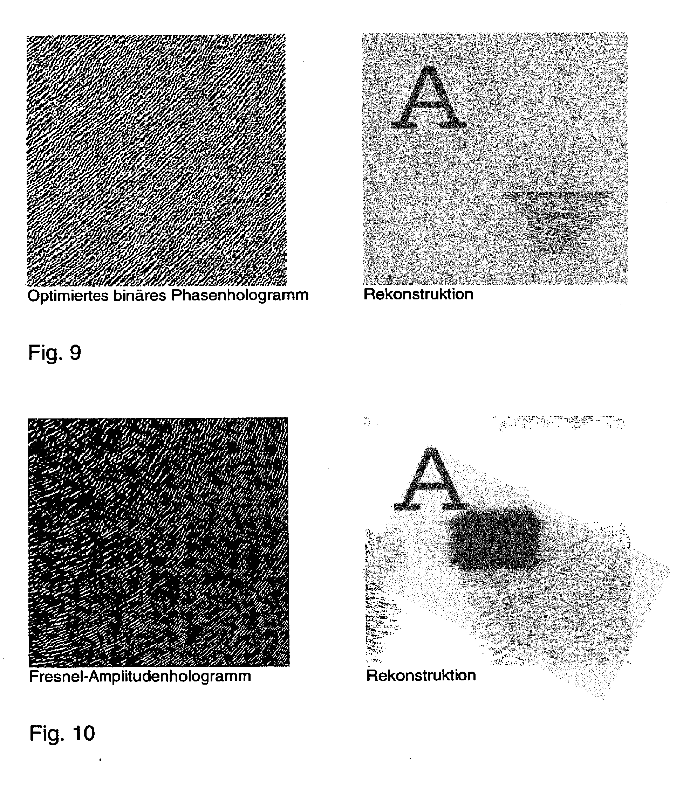

Fig. 9 zeigt eine Weiterentwicklung des binären Phasenhologramms, da hierbei eine Optimierung der binären Hologrammfunktion berechnet worden ist. Dazu kann man einen generalisierten Gerchberg-Saxton Algorithmus als iterative Optimierung oder einen Direct Binary Search als nicht-iterative Optimierung verwenden. Als Teil der Optimierung kann dabei ein Bereich um den Buchstaben "A" bestimmt werden, der ein geringeres Rauschen als der Rest der Reproduktion aufweist, wodurch der Kontrast in diesem Bereich erhöht wird. Auch hier gilt, dass eine unterschiedliche Schärfe der beiden Reproduktionen erhalten wird, die sich aus der zylindrischen Form des Holgramms ergibt.

Fig. 10 zeigt ein Beispiel, bei dem die Hologrammfunktion als Fresnel-Amplitudenhologramm berechnet worden ist. Bei der Reproduktion dieses Hologramms wird keine Abbildungslinse verwendet, jedoch wird bei der Berechnung der Hologrammfunktion ein Abstand zwischen Hologramm und der Reproduktion mit berücksichtigt, so dass eine scharfe Reproduktion nur im Abstandsbereich dieses vorgegebenen Abstandes entsteht. In der Reproduktion erscheint nur die plus erste Ordnung und ein im Vergleich zu den zuvor beschriebenen Hologrammtypen vergrößerter Anteil in nullter Ordnung. Die minus erste Ordnung ist bei nahen Abständen so stark verschmiert, zeigt also eine so schlechte Auflösung, dass sie nicht zu erkennen ist.

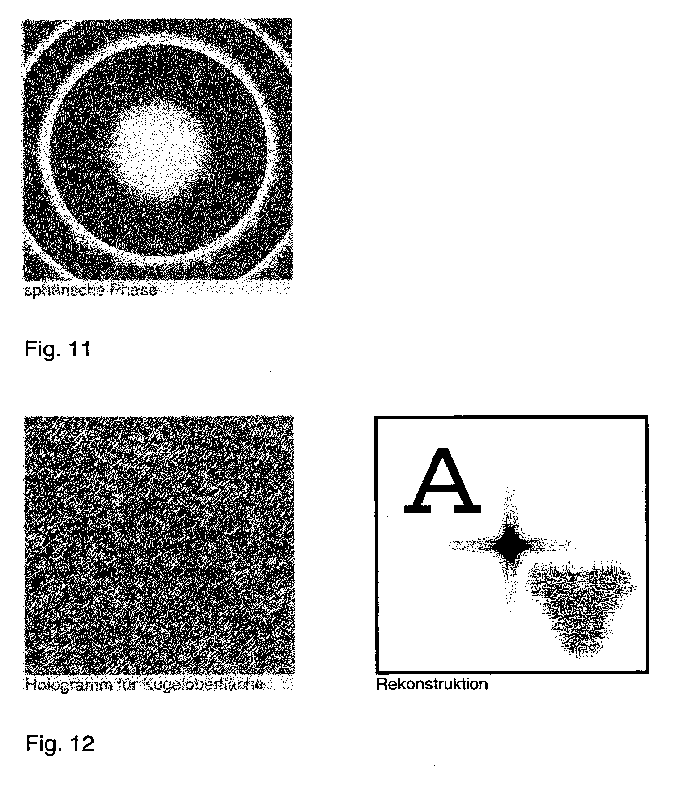

Fig. 11 zeigt ein weiteres Beispiel eines Phasendifferenzfeldes, bei dem eine sphärische Hologrammfläche angenommen worden ist. Dementsprechend weist die Phasenfunktion konzentrische Ringe mit unterschiedlichen Phasen auf.

Das sich daraus ergebende Amplitudenhologramm für die Kugeloberfläche ist in Fig. 12 links dargestellt. Die Reproduktion ist rechts dargestellt und weist wieder eine scharfe Rekonstruktion des Buchstabens "A" in plus erster Ordnung und eine unscharfe Rekonstruktion in minus erster Ordnung auf. Im Vergleich mit den zuvor erläuterten zylindrischen Hologrammflächen ist in Fig. 12 der rekonstruierte Buchstabe "A" in minus erster Ordnung in alle Richtungen unscharf bzw. verschmiert, da es keine bevorzugte Achse gibt.

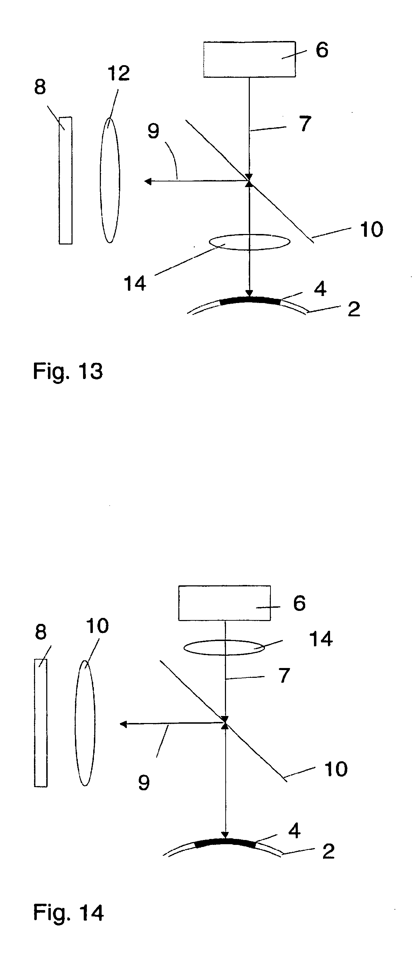

Die Fig. 13 bis 15 zeigen drei Vorrichtungen zum Rekonstruieren eines auf einer unebenen, hier zylindrischen Fläche eines Speichermediums 2 angeordneten computergenerierten Hologramms 4. Die Vorrichtungen unterscheiden sich lediglich in der Anordnung der Zylinderlinse, so dass zunächst eine für alle drei Vorrichtungen geltende Beschreibung angegeben wird. Dementsprechend werden in den Fig. 13 bis 15 die gleichen Bezugszeichen verwendet. Diese Vorrichtung bleibt ebenfalls für sphärische unebene Flächen gültig, wenn anstatt der zusätzlichen Zylinderlinse eine sphärische Linse in den Strahlengang eingebracht wird.

Die Vorrichtungen weisen eine Lichtquelle 6, vorliegend ein Laser zum Erzeugen eines Lesestrahls 7 und Aufnahmemittel 8, vorliegend eine CCD-Kamera zum Aufnehmen des vom Hologramm 4 gebeugten und reflektierten Lichtstrahls 9 auf, der von einem Strahlteiler 10 in Richtung der Kamera 8 abgelenkt wird. In der Kamera 8 entsteht dann die Rekonstruktion des Hologramms 4. Des Weiteren ist im Strahlengang vor der Kamera 8 eine Sammellinse 12 angeordnet, um im Fall eines mittels Fouriertransformation berechneten Holgramms die Rekonstruktion abzubilden.

Im Strahlengang zwischen dem Laser 6 und der Kamera 8 ist erfindungsgemäß eine Zylinderlinse 14 zum zumindest teilweisen Ausgleichen der zylindrischen Fläche des Hologramms vorgesehen. Mit der Zylinderlinse 14 wird dem gebeugten und zurück reflektierten Lichtstrahl 9 eine Zylinderphase hinzugefügt. Die Zylinderlinse ist dazu in der Regel konvex ausgebildet.

Fig. 13 zeigt nun, dass die Linse 14 im Strahlengang zwischen dem Strahlteiler 10 und dem Speichermedium 2 angeordnet ist. Dadurch verlaufen sowohl der Lesestrahl 7 als auch der reflektierte und gebeugte Lichtstrahl 9 durch die Zylinderlinse 14. Dies ist eine bevorzugte Leseanordnung, da sowohl der Lesestrahl auf die zylindrische Oberfläche abgebildet wird, als auch der reflektierte Strahl aus der Zylinderfläche in eine Ebene abgebildet wird. Dabei ist bevorzugt, dass die Zylinderlinse so nahe wie möglich an die zylindrische Oberfläche gebracht wird, um geometrische Verzerrungen zu vermeiden.

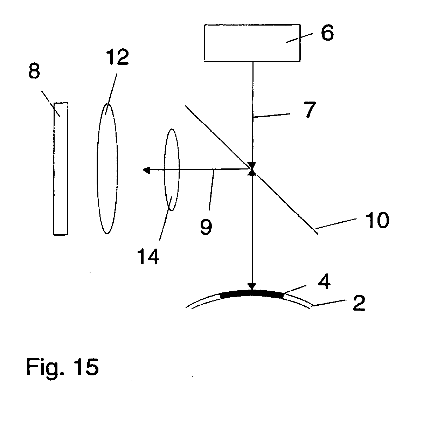

Fig. 14 zeigt, dass die Zylinderlinse 14 im Strahlengang zwischen dem Laser 6 und dem Strahlteiler 10 angeordnet ist. Dadurch verläuft nur der Lesestrahl 7 die Zylinderlinse 14. Fig. 15 zeigt schließlich, dass die Zylinderlinse 14 im Strahlengang zwischen dem Strahlteiler 10 und der Kamera 8 angeordnet ist. Somit verläuft nur der gebeugte und reflektierte Lichtstrahl 9 durch die Zylinderlinse 14.

Wie oben beschrieben worden ist, ist es bevorzugt, dass der einfallende Lesestrahl 7 in der Zwischenebene als ebene Welle angenommen werden kann. Dadurch wird die Berechnung erleichtert. Daher kann im Aufbau gemäß Fig. 13 im Strahlengang zwischen dem Laser 6 und dem Strahlteiler 10 eine konkave Zylinderlinse zum Ausgleich der konvexen Zylinderlinse 14 vorgesehen sein. Wenn sich die beiden Zylinderlinsen in ihrer optischen Wirkung ausgleichen, dann entsteht trotz der vorhandenen Zylinderlinse 14 eine ebene Welle in der direkt vor dem Holgramm angeordneten Zwischenebene. Da der gebeugte und reflektierte Lichtstrahl 9 dagegen die konkave Zylinderlinse nicht durchläuft, bleibt die durch die Zylinderlinse 14 hervorgerufen Zylinderphase erhalten.

Im Aufbau gemäß Fig. 14, bei dem die konvexe Zylinderlinse selbst nur im Lesestrahl 7 angeordnet ist, kann ein solcher Ausgleich durch eine konkave Zylinderlinse nicht vorgesehen sein, da ansonsten die Wirkung der Zylinderlinse insgesamt aufgehoben würde.

Die vorliegende Lesevorrichtung weist einen Aufbau auf, der an sich prinzipiell mit dem Aufbau von herkömmlichen Lesevorrichtungen übereinstimmt. Daher ist es bevorzugt, dass das die Zylinderlinse 14 in den Strahlengang einschwenkbar angeordnet ist, beispielsweise mittels eines Schwenkmechanismus. Dieses ermöglicht die Verwendung von Lesevorrichtungen für herkömmliche Anwendungen und für die hier beschriebene spezielle Anwendung.

Für die Brechkraft der Zylinderlinse gibt es zwei Möglichkeiten, die bereits oben erwähnt sind. Zum einen kann die Zylinderlinse 14 die zylindrische Hologrammfläche 4 vollständig ausgleichen. Damit wäre eine Berechnung eines normalen ebenen Hologramms und ein Einschreiben in ein Speichermedium möglich, ohne dass es der Anwendung eines erfindungsgemäßen Verfahrens bedarf. Denn die Zylinderlinse 14 ermöglicht in diesem Fall vollständig den durch die zylindrische Form der Holgrammfläche hervorgerufenen optischen Effekt auszugleichen.

Wenn dagegen das auf dem Speichermedium 2 angeordnete Hologramm 4 nach einem der oben beschriebenen Verfahren so berechnet worden ist, dass die zylindrische Hologrammfläche nur zum Teil, also mit einem anderem Zylinderradius, berücksichtigt worden ist, dann kann die Zylinderlinse so gewählt werden, dass der verbleibende Anteil der zylindrischen Hologrammfläche durch die Zylinderlinse 14 ausgeglichen wird.

Im Folgenden wird ein Verfahren zum Herstellen eines computergenerierten Hologramms auf einer unebenen, insbesondere zylindrischen Fläche beschrieben.

Zunächst wird die Hologrammfunktion, also die in das Speichermedium einzuschreibenden Punkteverteilung, mit Hilfe eines zuvor beschriebenen Verfahrens berechnet.

Die sich daraus ergebende Punkteverteilung wird dann an eine Schreibvorrichtung übertragen, mit deren Hilfe das Hologramm in ein eben angeordnetes Speichermedium eingeschrieben wird. Dazu wird punktweise Energie in eine optisch veränderbare Materialschicht des Speichermediums eingebracht. Durch die Menge der eingebrachten Energie kommt es zu einer mehr oder weniger starken optischen Veränderung der Materialschicht und somit zu einer optisch wirksamen Punkteverteilung im Speichermedium. Bei einer binären Verteilung werden also beispielsweise Punkte und keine Punkte geschrieben. Die optische Wirkung kann eine Phasenverschiebung und/oder eine Amplitudenveränderung sein.

Nach der Fertigstellung der Punkteverteilung im ebenen Speichermedium wird das Speichermedium auf einer unebenen, beispielsweise zylindrischen Oberfläche eines Werkstückes befestigt, wodurch die das Hologramm tragende Materialschicht des Speichermediums die zylindrische Form annimmt.

Danach kann das Speichermedium mit Hilfe einer herkömmlichen oder einer oben beschriebenen Lesevorrichtung ausgelesen werden. Eine herkömmliche, keine Zylinderlinse aufweisende Lesevorrichtung kann dann verwendet werden, wenn die Hologrammfunktion unter Berücksichtigung der zylindrischen Phase berechnet worden ist. Ist dagegen die zylindrische Phase nur zum Teil oder gar nicht berücksichtigt worden, so kann mit Hilfe einer eine Zylinderlinse aufweisenden Vorrichtung das Hologramm ausgelesen werden.

Für eine Qualitätskontrolle ist es jedoch erforderlich, das Speichermedium in einer ebenen Anordnung zu überprüfen, weil es in der Regel nicht möglich ist, das Speichermedium in eine entsprechende unebene Flächenform zu bringen. Ein in der Ebene angeordnetes Speichermedium kann jedoch dann nicht direkt ausgelesen werden, wenn bei der Berechnung die Unebenheit, also die zylindrische Form der Hologrammfläche berücksichtigt worden ist.

Um eine Qualitätskontrolle dennoch zu ermöglichen, kann vom ebenen Speichermedium das Hologramm ausgelesen und rekonstruiert werden, wobei eine der oben anhand der Fig. 13 bis 15 beschriebenen Vorrichtungen verwendet werden kann. Anstelle zu den dort beschriebenen konvexen Zylinderlinsen für den Fall einer zylindrischen Hologrammfläche kommen vorliegend konkave Zylinderlinsen zum Einsatz, um die Unebenheit der Zylinderform in den Strahlengang einzubringen, der wegen der Ebenheit bzw. Planheit des Speichermediums nicht vorhanden ist.

Wie bereits oben näher erläutert worden ist, kann bei der Berechnung der Hologrammfunktion, also der in das Speichermedium zu schreibenden Punkteverteilung berücksichtigt werden, dass aufgrund der Krümmung der Hologrammfläche bei einer Betrachtung in Richtung der Propagation des Lesestrahls je nach Winkelabweichung der Fläche von 90° das Rastermaß der Punkteverteilung enger wird. Bei kleinen Winkeln ist die Abweichung zwar gering, aber rechnerisch kann die Änderung des Rastermaß leicht berücksichtigt werden und führt zu einer weiteren Verbesserung der Qualität der Rekonstruktion.

## Patentansprüche

1. Computerimplementiertes Verfahren zum Berechnen eines auf einer unebenen Fläche anzuordnenden computergenerierten Reflexionshologramms,
- bei dem zwischen der unebenen Fläche und einer Rekonstruktionsebene, in der die Rekonstruktion liegen soll, eine Zwischenebene definiert wird,
- bei dem die Ausbreitung eines Lichtfeldes in Form eines elektromagnetischen Feldes, das durch Amplitude, Wellenlänge, Phase und Ausbreitungsrichtung in einer Fläche bestimmt ist, zwischen der Rekonstruktionsebene und der Zwischenebene mittels einer Transformation berechnet wird,
- bei dem die Ausbreitung des Lichtfeldes zwischen der Zwischenebene und der unebenen Fläche abgeschätzt wird,
- bei dem ein Phasendifferenzfeld aus der Wellenlänge des Lichtfeldes und der Verteilung der Laufzeitunterschiede des Lichts zwischen der Zwischenebene und der unebenen Fläche berechnet wird,
a) bei dem auf der Basis der zu rekonstruierenden Information das Lichtfeld in der Rekonstruktionsebene bestimmt wird und bei dem das Lichtfeld eines Lesestrahls in der unebenen Fläche bestimmt wird,
b) bei dem das Lichtfeld in der Zwischenebene aus der Ausbreitung des Lichtfeldes zwischen der Rekonstruktionsebene und der Zwischenebene mittels der Transformation berechnet wird und
c) bei dem das Lichtfeld in der unebenen Fläche durch eine Überlagerung des Lichtfeldes in der Zwischenebene mit dem Phasendifferenzfeld abgeschätzt und das abgeschätzte Lichtfeld mit dem Lichtfeld des Lesestrahls überlagert wird, um die Phasen- und/oder Amplitudeninformation des Hologramms zu berechnen.

2. Verfahren nach Anspruch 1,
d) bei dem das Lichtfeld des Lesestrahls in der Zwischenebene berechnet oder festgelegt wird und
e) bei dem das in der unebenen Fläche auftreffende Lichtfeld des Lesestrahls durch eine Überlagerung des Lichtfeldes des Lesestrahls in der Zwischenebene mit dem Phasendifferenzfeld abgeschätzt wird.

3. Verfahren nach Anspruch 2,
- bei dem das Lichtfeld des Lesestrahls in der Zwischenebene als ebene Welle festgelegt wird und
- bei dem der Lesestrahl in der Berechnung durch eine Verdopplung des Phasendifferenzfeldes zwischen der Zwischenebene und der Hologrammfläche berücksichtigt wird und das Lichtfeld des Lesestrahls im Weiteren ignoriert wird.

4. Verfahren nach einem der Ansprüche 1 bis 3,
bei dem ein Optimierungsalgorithmus zur Berechnung des Hologramms verwendet wird.

5. Verfahren nach einem der Ansprüche 1 bis 4,
bei dem die unebene Fläche mittels einer mathematischen und/oder numerischen Funktion berechnet oder angenähert wird.

6. Verfahren nach Anspruch 5,
bei dem die unebene Fläche eine Zylinderfläche, eine sphärische Fläche, eine parabolische Fläche oder eine sinusoidale Fläche ist.

7. Verfahren nach einem der Ansprüche 1 bis 6,
bei dem die durch ein im Strahlengang angeordnetes optisches Element hervorgerufene Phasenverschiebung berücksichtigt wird.

8. Verfahren zum Herstellen eines computergenerierten Hologramms auf einer unebenen Fläche,
- bei dem mit Hilfe eines Verfahrens nach einem der Ansprüche 1 bis 7 das Hologramm berechnet wird,
- bei dem das Hologramm mit Hilfe einer Schreibvorrichtung in ein eben angeordnetes Speichermedium eingeschrieben wird und
- bei dem das ebene Speichermedium auf der unebenen Fläche befestigt wird, wodurch die das Hologramm tragende Materialschicht des Speichermediums die Form der unebenen Fläche annimmt.

9. Verfahren nach Anspruch 8,
bei dem das Hologramm zur Qualitätskontrolle vom ebenen Speichermedium ausgelesen und rekonstruiert wird.

## Claims

1. Computer-implemented method for calculating a computer-generated reflection hologram to be arranged on a non-planar surface,
- wherein an intermediate plane is defined between the non-planar surface and a reconstruction plane, in which the reconstruction is intended to be situated,
- wherein the propagation of a light field in the form of an electromagnetic field which is determined by amplitude, wavelength, phase and direction of propagation in a surface between the reconstruction plane and the intermediate plane is calculated by means of a transformation,
- wherein the propagation of the light field between the intermediate plane and the non-planar surface is estimated, and
- wherein a phase difference field is calculated from the wavelength of the light field and the distribution of the propagation time differences of the light between the intermediate plane and the non-planar surface,
a) wherein, on the basis of the information to be reconstructed, the light field in the reconstruction plane is determined, and wherein the light field of a read beam is determined in the non-planar surface,
b) wherein the light field in the intermediate plane is calculated from the propagation of the light field between the reconstruction plane and the intermediate plane by means of the transformation, and
c) wherein the light field in the non-planar surface is estimated by a superimposition of the light field in the intermediate plane with the phase difference field and the estimated light field is superimposed with the light field of the read beam in order to calculate the phase and/or amplitude information of the hologram.

2. Method according to Claim 1,
d) wherein the light field of the read beam is calculated or defined in the intermediate plane, and
e) wherein the light field of the read beam that impinges in the non-planar surface is estimated by a superimposition of the light field of the read beam in the intermediate plane with the phase difference field.

3. Method according to Claim 2,
- wherein the light field of the read beam is defined in the intermediate plane as a plane wave, and
- wherein the read beam is taken into account in the calculation by a doubling of the phase difference field between the intermediate plane and the hologram surface and the light field of the read beam is ignored thereafter.

4. Method according to any of Claims 1 to 3,
wherein an optimization algorithm is used for calculating the hologram.

5. Method according to any of Claims 1 to 4,
wherein the non-planar surface is calculated or approximated by means of a mathematical and/or numerical function.

6. Method according to Claim 5,
wherein the non-planar surface is a cylindrical surface, a spherical surface, a parabolic surface or a sinusoidal surface.

7. Method according to any of Claims 1 to 6,
wherein the phase shift brought about by an optical element arranged in the beam path is taken into account.

8. Method for producing a computer-generated hologram on a non-planar surface,
- wherein the hologram is calculated with the aid of a method according to any of Claims 1 to 7,
- wherein the hologram is written to a storage medium arranged in planar fashion with the aid of a writing device, and
- wherein the planar storage medium is fixed on the non-planar surface, whereby the hologram-bearing material layer of the storage medium assumes the shape of the non-planar surface.

9. Method according to Claim 8,
wherein the hologram is read out from the planar storage medium and reconstructed for the purpose of quality control.

## Revendications

1. Procédé mis en oeuvre par ordinateur pour le calcul d'un hologramme par réflexion généré par ordinateur à disposer sur une surface non planaire,
- dans lequel on définit un plan intermédiaire entre la surface non planaire et un plan de reconstruction, dans lequel la reconstruction doit se placer,
- dans lequel on calcule l'extension d'un champ lumineux sous la forme d'un champ électromagnétique, qui est déterminé par l'amplitude, la longueur d'onde, la phase et la direction d'extension dans une surface, entre le plan de reconstruction et le plan intermédiaire au moyen d'une transformation,
- dans lequel on évalue l'extension du champ lumineux entre le plan intermédiaire et la surface non planaire,
- dans lequel on calcule un champ de différence de phase à partir de la longueur d'onde du champ lumineux et de la répartition des différences des temps de parcours de la lumière entre le plan intermédiaire et la surface non planaire,
a) dans lequel on détermine sur la base de l'information à reconstruire le champ lumineux dans le plan de reconstruction et dans lequel on détermine le champ lumineux d'un faisceau de lecture dans la surface non planaire,
b) dans lequel on calcule le champ lumineux dans le plan intermédiaire à partir de l'extension du champ lumineux entre le plan de reconstruction et le plan intermédiaire au moyen de la transformation, et
c) dans lequel on évalue le champ lumineux dans la surface non planaire par une superposition du champ lumineux dans le plan intermédiaire avec le champ de différence de phase et on superpose le champ lumineux évalué avec le champ lumineux du faisceau de lecture, pour calculer l'information de phase et/ou d'amplitude de l'hologramme.

2. Procédé selon la revendication 1,
d) dans lequel on calcule ou on définit le champ lumineux du faisceau de lecture dans le plan intermédiaire et
e) dans lequel on évalue le champ lumineux du faisceau de lecture arrivant dans la surface non planaire par une superposition du champ lumineux du faisceau de lecture dans le plan intermédiaire avec le champ de différence de phase.

3. Procédé selon la revendication 2,
- dans lequel on définit le champ lumineux du faisceau de lecture dans le plan intermédiaire comme une onde plane et
- dans lequel on tient compte du faisceau de lecture dans le calcul par un doublement du champ de différence de phase entre le plan intermédiaire et la surface d'hologramme et on ignore pour le reste le champ lumineux du faisceau de lecture.

4. Procédé selon l'une quelconque des revendications 1 à 3, dans lequel on utilise un algorithme d'optimisation pour le calcul de l'hologramme.

5. Procédé selon l'une quelconque des revendications 1 à 4, dans lequel on calcule ou on approche la surface non planaire au moyen d'une fonction mathématique et/ou numérique.

6. Procédé selon la revendication 5, dans lequel la surface non planaire est une surface cylindrique, une surface sphérique, une surface parabolique ou une surface sinusoïdale.

7. Procédé selon l'une quelconque des revendications 1 à 6, dans lequel on tient compte du déphasage provoqué par un élément optique disposé dans le trajet des rayons.

8. Procédé de production d'un hologramme généré par ordinateur sur une surface non planaire,
- dans lequel on calcule l'hologramme au moyen d'un procédé selon l'une quelconque des revendications 1 à 7,
- dans lequel on inscrit l'hologramme à l'aide d'un dispositif d'écriture dans un support de mémoire disposé à plat, et
- dans lequel on fixe le support de mémoire sur la surface non planaire, la couche de matière du support de mémoire qui porte l'hologramme prenant de ce fait la forme de la surface non plane.

9. Procédé selon la revendication 8, dans lequel on lit et on reconstruit l'hologramme à partir du support de mémoire plan pour le contrôle de qualité.
